# EUROPEAN PATENT APPLICATION

(11) **EP 4 668 720 A1**
(43) Date of publication of application: **24.12.2025**
(21) Application number: 24760477.0
(22) Date of filing: 15.01.2024
(51) Int. Cl.: H04M 1/02, H01Q 1/24

(54) **ELECTRONIC DEVICE COMPRISING VENTILATION STRUCTURE**

(30) Priority: 23.02.2023 KR 20230024135; 17.03.2023 KR 20230035198
(71) Applicant: Samsung Electronics Co., Ltd., Suwon-si, Gyeonggi-do 16677 (KR)
(72) Inventor: JUNG, Yanggyun, Suwon-si, Gyeonggi-do 16677 (KR)
(74) Representative: Gulde & Partner
(86) International application number: PCT/KR2024/000699
(87) International publication number: WO 2024/177285

(57) **Abstract**

According to the present disclosure, an electronic device can be provided. The electronic device may comprise: a housing including a first portion, which forms one part of the exterior thereof, and a second portion, which extends from the first portion to the inside of the electronic device; an opening formed by passing through the first portion to one part of the second portion; a nonconductive cover arranged at the opening formed at the first portion; an antenna assembly, which is located on the second portion and is arranged to face the nonconductive cover through the opening; and a ventilation member, which is arranged in the opening and is arranged between the nonconductive cover and the antenna assembly.

## Description

### [Technical Field]

Embodiments of the disclosure relate to an electronic device including a ventilation structure.

### [Background Art]

The term "electronic device" may refer to a device that performs a specific function based on an installed program, such as a home appliance, an electronic scheduler, a portable multimedia player, a mobile communication terminal, a tablet PC, a video/audio device, a desktop/laptop PC, or a vehicle navigation system. For example, these electronic devices may output stored information as sound or images. As the demand for mobile communication and the degree of integration of electronic devices have increased, various techniques are being developed to enhance the portability of electronic devices and improve user convenience in using multimedia functions or the like.

The above-described information may be provided as related art for the purpose of assisting in understanding the disclosure. No assertion or decision is made as to whether any of the above might be applicable as prior art with regard to the disclosure.

### [Detailed Description of the Invention]

### [Technical Solution]

According to the present disclosure, an electronic device may be provided. The electronic device may include a housing including a first portion that defines a part of an exterior of the electronic device and a second portion that extends to an inside the electronic device from the first portion, an opening formed through the first portion to a part of the second portion, a non-conductive cover disposed in the opening formed in the first portion, an antenna assembly located on the second portion and disposed to face the non-conductive cover through the opening, and a ventilation member disposed in the opening and between the non-conductive cover and the antenna assembly.

### [Brief Description of Drawings]

The above and other aspects, features, and/or advantages of an embodiment of the disclosure will be more apparent from the following detailed description taken with reference to the accompanying drawings.
FIG. 1 is a block diagram of an electronic device in a network environment according to an embodiment of the disclosure.
FIG. 2 is a front perspective view illustrating an electronic device according to an embodiment of the disclosure.
FIG. 3 is a rear perspective view of the electronic device according to an embodiment of the disclosure.
   Throughout the appended drawings, like reference numerals may be assigned to like components, configurations, and/or structures.
FIG. 4 is a front exploded perspective view of an electronic device according to an embodiment of the disclosure.
FIG. 5 is a rear exploded perspective view of the electronic device according to an embodiment of the disclosure.
FIG. 6 is a cross-sectional view of the electronic device according to an embodiment of the disclosure, taken along line A-A' of FIG. 3.
FIG. 7 is a rear perspective view illustrating a housing, a non-conductive cover, and an antenna assembly of the electronic device according to an embodiment of the disclosure.
FIG. 8 is a rear view illustrating the housing, the non-conductive cover, and a ventilation member of the electronic device according to an embodiment of the disclosure.
FIG. 9A is an exploded rear perspective view illustrating the housing, the non-conductive cover, and the ventilation member of the electronic device according to an embodiment of the disclosure.
FIG. 9B is a rear perspective view of the non-conductive cover of the electronic device according to an embodiment of the disclosure.
FIG. 10 is a cross-sectional view taken along line B-B' in FIG. 8.
FIG. 11 is a rear view illustrating a housing, a non-conductive cover, and a ventilation assembly of an electronic device according to an embodiment of the disclosure.
FIG. 12A is a front exploded perspective view illustrating the housing, the non-conductive cover, and the ventilation assembly of the electronic device according to an embodiment of the disclosure.
FIG. 12B is a rear exploded perspective view illustrating the housing, the non-conductive cover, and the ventilation assembly of the electronic device according to an embodiment of the disclosure.
FIG. 13 is a cross-sectional view taken along line C-C' of FIG. 11.
FIG. 14 is a cross-sectional view taken along line D-D' of FIG. 11.

Throughout the appended drawings, like reference numerals may be assigned to like components, configurations, and/or structures.

### [Mode for Carrying out the Invention]

The following description with reference to the accompanying drawings is provided to assist in comprehensive understanding of various embodiments of the disclosure as defined by the claims and equivalents thereof. The following description includes various specific details to assist in the understanding, but the details are to be regarded merely as examples. Accordingly, those skill in the art will recognize that various changes and modifications may be made to the various embodiments set forth herein without departing from the scope and spirit of the disclosure. In addition, descriptions of known functions and configurations may be omitted for the sake of clarity and brevity.

The terms and words used in the following description and the claims are not limited to the bibliographical meanings thereof, but are merely used by the inventors to enable clear and consistent understanding of the disclosure. Accordingly, it will be apparent to those skilled in the art that the following description of various embodiments of the disclosure is not intended to limit the disclosure as defined by the appended claims and equivalents thereof, but is provided merely for the purpose of illustration.

It is to be understood that the singular forms "a," "an," and "the" include plural referents unless the context clearly dictates otherwise. Therefore, for example, reference to "a component surface" includes reference to one or more such surfaces.

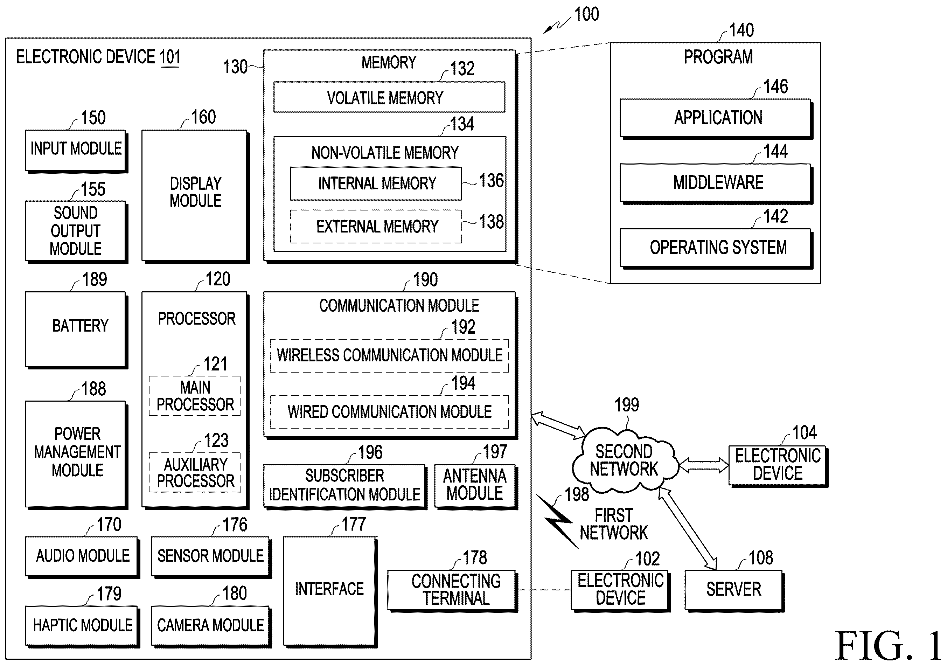

FIG. 1 is a block diagram illustrating an electronic device in a network environment according to an embodiment of this disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, a length direction, a width direction, and/or a thickness direction of an electronic device may be mentioned. The length direction may be defined as the "Y-axis direction," the width direction may be defined as the "X-axis direction," and/or the thickness direction may be defined as the "Z-axis direction." In an embodiment, the direction in which a component is oriented may be mentioned along with the orthogonal coordinate system illustrated in the drawings, as well as the "negative/positive symbol (-/+)." For example, the front surface of an electronic device or a housing may be defined as a "surface oriented in the +Z direction," and the rear surface may be defined as a "surface oriented in the -Z direction." In an embodiment, a side surface of the electronic device or the housing may include an area oriented in the +X direction, an area oriented in the +Y direction, an area oriented in the -X direction, and/or an area oriented in the -Y direction. In another embodiment, the "X-axis direction" may include both the "-X direction" and the "+X direction." It is noted that these are based on the orthogonal coordinate system illustrated in the drawings for the sake of brevity of description, and the description of these directions or components does not limit an embodiment of the disclosure. For example, depending on whether the electronic device is in an unfolded or folded state, the direction in which the aforementioned front or rear surface may vary, and the aforementioned directions may be interpreted differently depending on a user's holding habits.

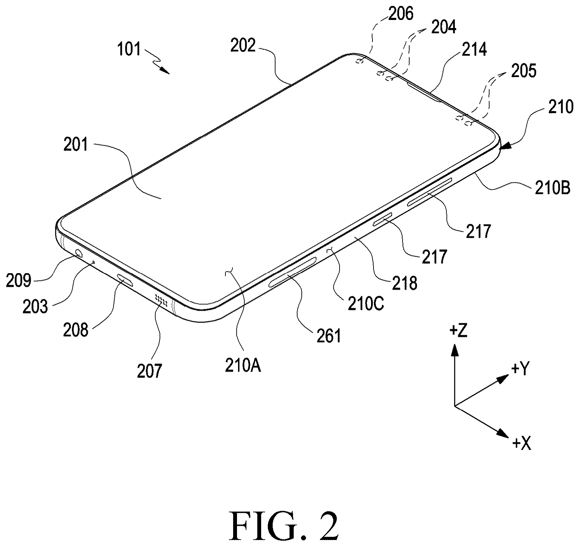

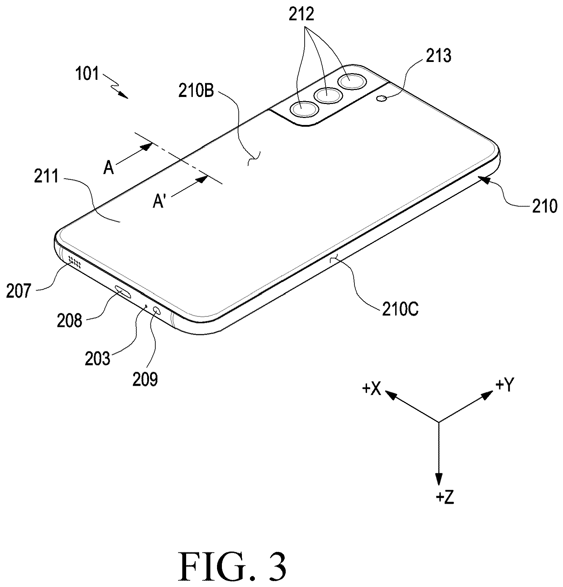

FIG. 2 is a front perspective view of an electronic device according to an embodiment of the disclosure. FIG. 3 is a perspective view illustrating the electronic device of FIG. 2 according to an embodiment of the disclosure, viewed from the rear side. The configuration of the electronic device 101 of FIGS. 2 and 3 may be wholly or partially the same as that of the electronic device 101 of FIG. 1.

Referring to FIGS. 2 and 3, according to an embodiment, the electronic device 101 may include a housing 210 including a first surface (or a front surface) 210A, a second surface (or a rear surface) 210B, and a side surface 210C surrounding the space between the first surface 210A and the second surface 210B. In an embodiment (not illustrated), the housing 210 may refer to a structure that forms a portion of the first surface 210A of FIG. 2, and the second surface 210B and the side surface 210C of FIG. 3. According to an embodiment, at least a portion of the first surface 210A may be made of a substantially transparent front surface plate 202 (e.g., a glass plate or a polymer plate including various coating layers). The second surface 210B may be made of a substantially opaque rear surface plate 211. The rear surface plate 211 may be made of, for example, coated or colored glass, ceramic, polymer, metal (e.g., aluminum, stainless steel (STS), or magnesium), or a combination of two or more of these materials. The side surface 210C may be defined by the side surface structure (or a "side surface bezel structure") 218 coupled to the front surface plate 202 and the rear surface plate 211 and including metal and/or polymer. In an embodiment, the rear surface plate 211 and the side surface structure 218 may be integrated with each other and may include the same material (e.g., a metal material such as aluminum).

Although not illustrated, the front surface plate 202 may include one or more areas that are curved and extend seamlessly from at least a portion of an edge toward the rear surface plate 211. In an embodiment, the front surface plate 202 (or the rear surface plate 211) may include only one of the areas bent and extending toward the rear surface plate 211 (or the front surface plate 202), at one side edge of the first surface 210A. According to an embodiment, the front surface plate 202 or the rear surface plate 211 may have a substantially flat plate shape, and in this case, may not include a bent and extending area. When the bent and extending area is included, the thickness of the electronic device 101 in the portion including the bent and extending area may be smaller than the thicknesses of other portions.

According to an embodiment, the electronic device 101 may include at least one of a display 201, an audio module (not illustrated) including one or more sound holes 203, 207, and 214 (e.g., the audio module 170 in FIG. 1), a sensor module 204 (e.g., the sensor module 176 in FIG. 1), camera modules 205, 212, and 213 (e.g., the camera module 180 in FIG. 1), key input devices 217 (e.g., the input module 150 in FIG. 1), a light-emitting element 206, connector holes 208 and 209 (e.g., the connection terminal 178 in FIG. 1), and a non-conductive cover 261. In an embodiment, the electronic device 101 may omit at least one of the components (e.g., the key input devices 217 or the light-emitting element 206) or may additionally include other components.

The display 201 may be visually exposed through a substantial portion of, for example, the front surface plate 202. In an embodiment, at least a portion of the display 201 may be visually exposed through the front surface plate 202 forming the first surface 210A or through a portion of the side surface 210C. In an embodiment, the edge of the display 201 may be formed to be substantially the same as the shape of the periphery of the front surface plate 202 adjacent thereto. In an embodiment (not illustrated), the distance between the periphery of the display 201 and the periphery of the front surface plate 202 may be substantially constant in order to enlarge the visually exposed area of the display 201.

In an embodiment (not illustrated), recesses or openings may be provided in a portion of the screen display area of the display 201, and one or more of a sound hole 214, the sensor modules 204, the camera modules 205, and the light-emitting elements 206, which are aligned with the recesses or the openings, may be included. In an embodiment (not illustrated), the rear surface of the screen display area of the display 201 may include at least one of the sound hole 214, the sensor modules 204, the camera modules 205, a fingerprint sensor (not illustrated), and the light-emitting elements 206. In an embodiment (not illustrated), the display 201 may be coupled to or disposed adjacent to a touch-sensitive circuit, a pressure sensor capable of measuring a touch intensity (pressure), and/or a digitizer configured to detect an electromagnetic field-type stylus pen. In an embodiment, at least some of the sensor modules 204 and/or at least some of the key input devices 217 may be disposed on the side surface 210C.

An audio module (not illustrated) may include a microphone hole 203 and sound holes 207 and 214. A microphone configured to acquire external sound may be placed inside the microphone hole 203, and in an embodiment, a plurality of microphones may be placed to detect the direction of sound. According to an embodiment, the sound holes 207 and 214 may include an external sound hole 207 and a communication receiver hole 214. In an embodiment, the sound holes 207 and 214 and the microphone hole 203 may be implemented as one hole, or a speaker may be included in the audio module without the sound holes 207 and 214 (e.g., a piezo speaker).

The sensor module 204 may generate electrical signals or data values corresponding to an internal operating state or an external environmental state of the electronic device 101. The sensor modules 204 may include, for example, a first sensor module 204 (e.g., a proximity sensor) and/or a second sensor module (not illustrated) (e.g., a fingerprint sensor) disposed on the first surface 210A of the housing 210. According to an embodiment, an additional sensor module may be disposed on the second surface 210B of the housing 210. The fingerprint sensor (not illustrated) may be disposed not only on the first surface 210A (e.g., the display 201) of the housing 210, but also on the second surface 210B or the side surface 210C of the housing 210. The electronic device 101 may further include at least one of, for example, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 204.

The camera modules 205, 212, and 213 may include a first camera device 205 disposed on the first surface 210A of the electronic device 101, and a second camera device 212 and/or a flash 213 disposed on the second surface 210B. The camera devices 205 and 212 may include one or more lenses, an image sensor, and/or an image signal processor. The flash 213 may include, for example, a light-emitting diode or a xenon lamp. In an embodiment, one or more lenses (e.g., an infrared camera lens, a wide-angle lens, and a telephoto lens) and image sensors may be disposed on one surface of the electronic device 101. In an embodiment, the flash 213 may emit infrared rays. For example, the infrared rays emitted from the flash 213 and reflected by an object may be received through a sensor module (not illustrated) disposed on the second surface 210B of the housing 210. The electronic device 101 or the processor of the electronic device 101 may detect depth information of a subject based on a time point at which infrared rays are received by the sensor module.

The key input devices 217 may be disposed on the side surface 210C of the housing 210. In an embodiment, the electronic device 101 may not include some or all of the above-mentioned key input devices 217, and key input devices 217, which are not included, may be implemented in another form, such as soft keys, on the display 201. In an embodiment, the key input devices may include a sensor module disposed on the second surface 210B of the housing 210.

The light-emitting element 206 may be disposed, for example, on the first surface 210A of the housing 210. The light-emitting element 206 may provide, for example, the state information of the electronic device 101 in an optical form. In an embodiment, the light-emitting element 206 may provide, for example, a light source that operates in conjunction with the camera module 205. The light-emitting element 206 may include, for example, an LED, an IR LED, and a xenon lamp.

The connector holes 208 and 209 may include a first connector hole 208 capable of accommodating a connector (e.g., a USB connector) configured to transmit/receive power and/or data to/from an external electronic device, and a second connector hole (e.g., an earphone jack) 209 capable of accommodating a connector configured to transmit/receive an audio signal to/from an external electronic device.

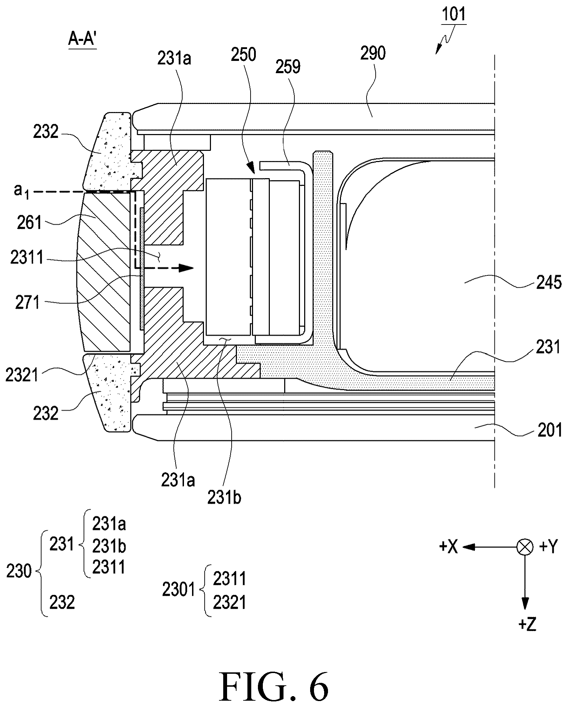

The non-conductive cover 261 may be disposed in a through-hole or a recess formed on one side of the housing 210. According to an embodiment, the non-conductive cover 261 may be disposed to correspond to an antenna assembly (e.g., the antenna assembly 250 of FIG. 6) disposed inside the housing 210. For example, the non-conductive cover 261 and the antenna assembly may be overlapped or aligned with respect to a certain axis (e.g., the X-axis). According to an embodiment, the electronic device 101 may include a ventilation structure connected to an inner space of the electronic device 101 from a gap (e.g., a coupling clearance) between the non-conductive cover 261 and the through-hole of the housing 210 in which the non-conductive cover 261 is disposed.

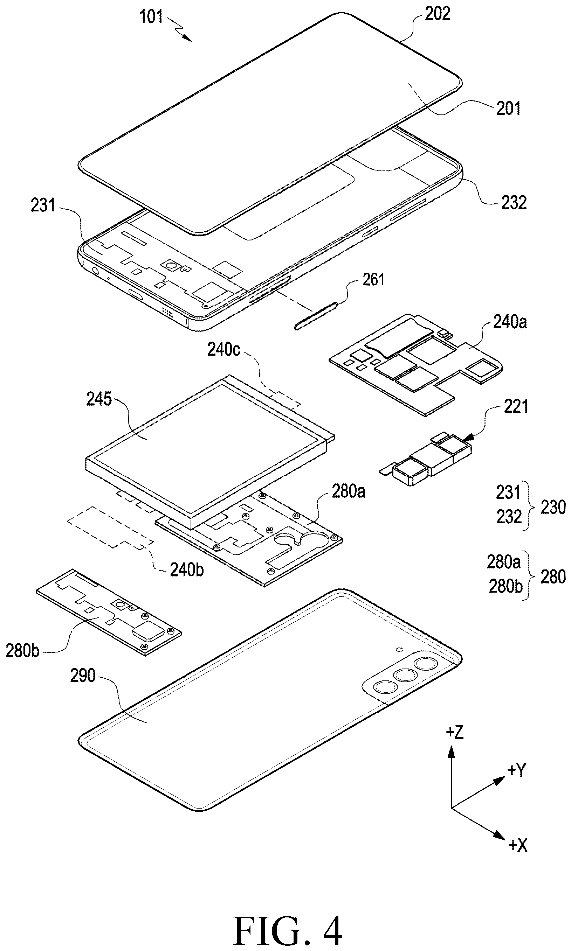

FIG. 4 is a front exploded perspective view illustrating the electronic device 101 according to an embodiment illustrated in the disclosure of FIG. 2. FIG. 6 is a rear exploded perspective view illustrating the electronic device 101 according to an embodiment illustrated in the disclosure of FIG. 2.

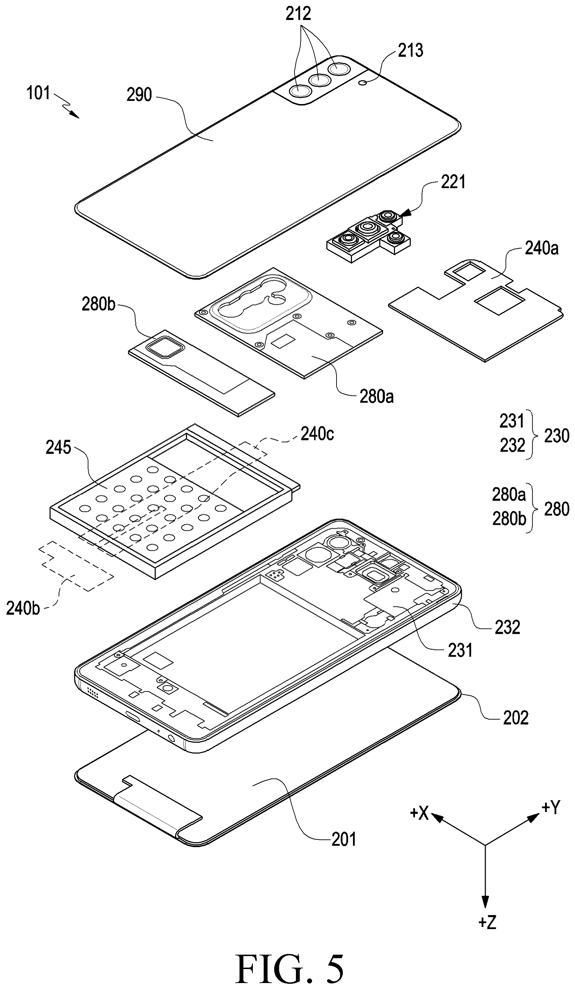

Referring to FIGS. 4 and 5, the electronic device 101 (e.g., the electronic device 101 of FIG. 1 and/or the electronic device 101 of FIG. 2 or FIG. 3) may include a support structure 231 (e.g., a bracket), a side surface bezel structure 232, a front surface plate 202 (e.g., the front surface plate 202 of FIG. 2), a display 201 (e.g., the display 201 of FIG. 2), one or more printed circuit boards (or circuit board assembly) 240a and 240b, a rear case 280, a battery 245 (e.g., the battery 189 of FIG. 1), an antenna (not illustrated) (e.g., the antenna module 197 of FIG. 1), a camera module 221 (e.g., the camera module 180 of FIG. 1), a non-conductive cover 261 (e.g., the non-conductive cover 261 of FIG. 2), and/or a rear surface plate 290 (e.g., the rear surface plate 211 of FIG. 3). When the electronic device 101 includes a plurality of printed circuit boards 240a and 240b, the electronic device 101 may include at least one flexible printed circuit board 240c to electrically connect different printed circuit boards. For example, the printed circuit boards 240a and 240b may include a first circuit board 240a positioned above the battery 245 and a second circuit board 240b positioned below the battery 245, and the flexible printed circuit board 240c may electrically interconnect the first circuit board 240a and the second circuit board 240b.

According to an embodiment, the electronic device 101 may omit at least one of the components (e.g., the support structure 231 or the rear case 280) or may additionally include other components. At least one of the components of the electronic device 101 may be the same as or similar to at least one of the components of the electronic device 101 illustrated in FIG. 2 or FIG. 3, and redundant descriptions will be omitted below.

In an embodiment, the support structure 231 may be provided in at least a partially planar form. In another embodiment, the support structure 231 may be disposed inside the electronic device 101 and may be either connected to or integrated with the side surface bezel structure 232. For example, the support structure 231 may be made of a conductive material and/or a non-conductive material (e.g., polymer). When the support structure 231 includes a conductive material such as metal, a portion of the side surface bezel structure 232 or the support structure 231 may function as an antenna. The support structure 231 may have two surfaces facing away from each other. The display 201 may be disposed on one of the two surfaces of the support structure 231, while the printed circuit boards 240a and 240b may be disposed on the other surface.

According to an embodiment, the support member 231 and the side surface bezel structure 232 may be combined and referred to as a front case or a housing 230. According to an embodiment, the housing 230 may be generally understood as a structure to accommodate, protect, or place electrical/electronic components such as printed circuit boards 240a and 240b or a battery 245. In an embodiment, it may be understood that the housing 230 includes structures capable of being visually or tactfully recognized by a user in the exterior of the electronic device 101, such as the side surface bezel structure 232, the front surface plate 202, and/or the rear surface plate 290. In an embodiment, the "front surface or rear surface of the housing 230" may refer to the first surface 210A in FIG. 2 or the second surface 210B in FIG. 3. In an embodiment, the support member 231 may be disposed between the front surface plate 202 (e.g., the first surface 210A in FIG. 1) and the rear surface plate 290 (e.g., the second surface 210B in FIG. 3) and may serve as a structure on which electrical/electronic components, such as the printed circuit boards 240a and 240b or the camera module 221, are disposed. In the detailed description below, the camera module 221 may be exemplified as being generally configured to receive light incident through the second surface 210B in FIG. 3, but the camera module 205 of FIG. 2 may also be disposed inside an electronic device 101 through the configuration of an embodiment described below.

In an embodiment, the rear case 280 may include an upper rear case 280a and a lower rear case 280b. In an embodiment, the upper rear case 280a may be disposed to enclose the printed circuit boards 240a and 240b (e.g., the first circuit board 240a) together with a portion of the support structure 231. For example, the upper rear case 280a may be disposed to face the support structure 231 with the first circuit board 240a interposed therebetween.

According to an embodiment, various components may be mounted on the printed circuit boards 240a and 240b, including a circuit device implemented in the form of an integrated circuit chip (e.g., a processor), a communication module (e.g., the communication module 190 of FIG. 1), memory, interfaces, or various electrical/electronic components. The processor may include one or more of a central processing unit, an application processor, a graphics processing unit, an image signal processor, a sensor hub processor, or a communication processor. The memory may include, for example, volatile memory or non-volatile memory. The interface may include, for example, a high-definition multimedia interface (HDMI), a universal serial bus (USB) interface, an SD card interface, and/or an audio interface. The interface may electrically or physically connect, for example, the electronic device 101 to an external electronic device, and may include a USB connector, an SD card/MMC connector, or an audio connector. According to an embodiment, the printed circuit boards 240a and 240b may be provided with electromagnetic shielding from the rear case 280.

According to another embodiment, the lower rear case 280b may serve as a structure to place various electrical/electronic components, such as an interface (e.g., a USB connector, an SD card/MMC connector, or an audio connector). According to an embodiment, electrical/electronic components, such as an interface (e.g., a USB connector, an SD card/MMC connector, or an audio connector), may be disposed on an additional printed circuit board (not illustrated). In this case, the lower rear case 280b may be disposed to enclose the additional printed circuit board (not illustrated) together with another portion of the support structure 231. For example, the interface disposed on the additional printed circuit board (not illustrated) or the lower rear case 280b may be disposed to correspond to the audio hole 207 or the connector holes 208 and 209 illustrated in FIG. 2.

The battery 245 is a device configured to supply power to at least one component of the electronic device 101, and may include, for example, a non-rechargeable primary battery, a rechargeable secondary battery, or a fuel cell. At least a portion of the battery 245 may be disposed on substantially the same plane as, for example, the printed circuit boards 240a and 240b. The battery 245 may be integrally disposed inside the electronic device 101 or may be detachably disposed on the electronic device 101.

An antenna (not illustrated) may include a conductor pattern implemented on the surface of the rear case 280, for example, through a laser direct structuring (LDS) process. In an embodiment, the antenna may include a printed circuit pattern provided on the surface of a thin film, and the thin film-type antenna may be disposed between the rear surface plate 290 and the battery 245. The antenna may include, for example, a near-field communication (NFC) antenna, a wireless charging antenna, and/or a magnetic secure transmission (MST) antenna. The antenna may, for example, perform short-distance communication with an external device, or wirelessly transmit and receive power required for charging. In an embodiment, another antenna structure may be configured by a part of, or a combination of, the support structure 231 and/or the side surface bezel structure 232.

In an embodiment, the camera module 221 may include at least one camera module, for example, at least one of the multiple camera modules illustrated in FIGS. 4 and 5. In an embodiment, the electronic device 101 may include one or more optical holes or cover windows 222, 223, and 229. According to an embodiment, the camera module 221 may receive, inside the electronic device 101, at least a portion of light, incident through the optical holes or cover windows 222, 223, and 229. In an embodiment, the camera module 221 may be disposed on a portion of the support structure 231 at a position near the printed circuit boards 240a and 240b. In an embodiment, the camera module 221 may be generally aligned with one of the cover windows 222, 223, and 229, and may be at least partially surrounded by the rear case 280 (e.g., an upper rear case 280a).

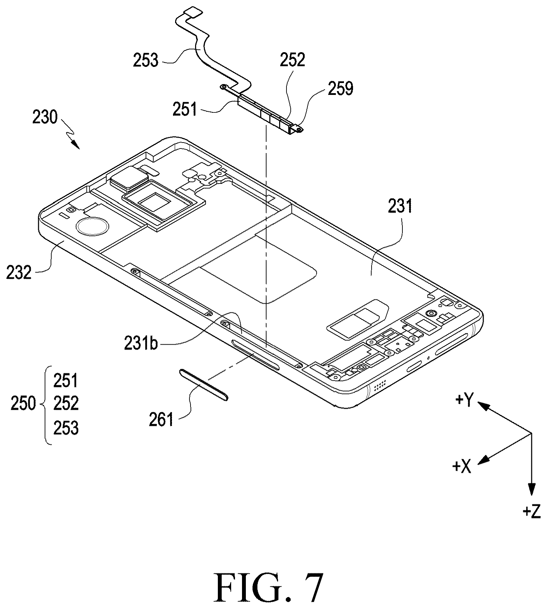

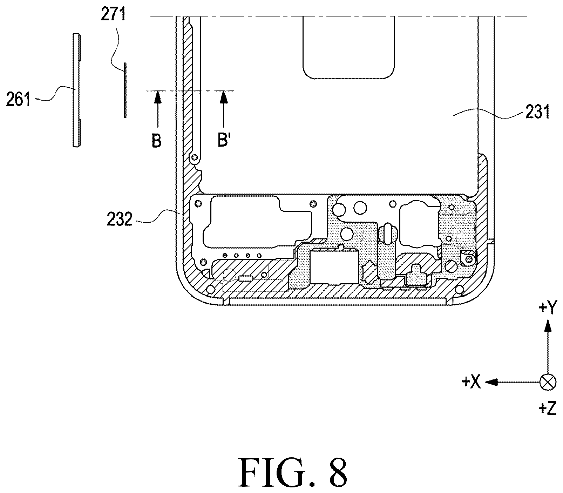

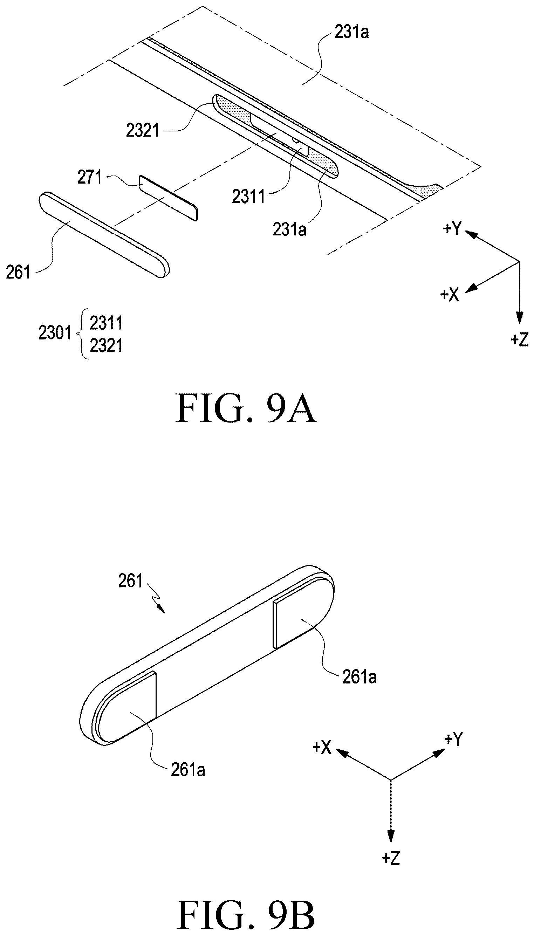

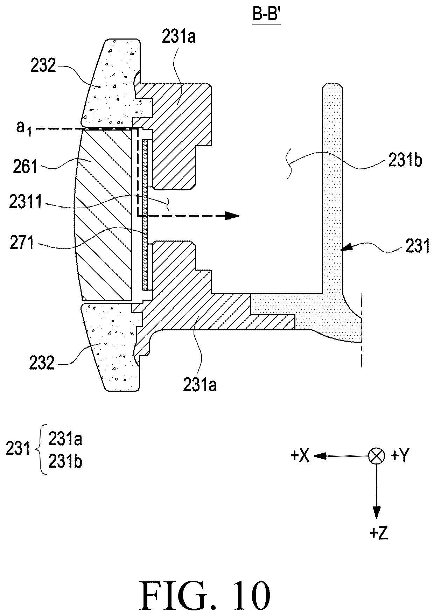

FIG. 6 is a cross-sectional view of the electronic device according to an embodiment of the disclosure, taken along line A-A' of FIG. 3. FIG. 7 is a rear perspective view illustrating a housing, a non-conductive cover, and an antenna assembly of the electronic device according to an embodiment of the disclosure. FIG. 8 is a rear view illustrating the housing, the non-conductive cover, and a ventilation member of the electronic device according to an embodiment of the disclosure. FIG. 9A is an exploded rear perspective view illustrating the housing, the non-conductive cover, and the ventilation member of the electronic device according to an embodiment of the disclosure. FIG. 9B is a rear perspective view of the non-conductive cover of the electronic device according to an embodiment of the disclosure. FIG. 10 is a cross-sectional view taken along line B-B' in FIG. 8.

The configuration of the electronic device 101 of FIG. 6 may be entirely or partially identical to that of the electronic device 101 of FIG. 1 and/or the electronic device 101 of FIGS. 2 to 5. The configuration of the housing 230 illustrated in FIGS. 6 to 9A and FIG. 10 may be wholly or partially the same as the configuration of the housing 210 of FIGS. 2 and 3 and/or the housing 230 of FIGS. 4 and 5.

Referring to FIGS. 6 to 10, in an embodiment, an electronic device 101 (e.g., the electronic device 101 of FIGS. 1 to 5) may include a housing 230 (e.g., the housing 210 of FIGS. 2 and 3 and/or the housing 230 of FIGS. 4 and 5), a display 201 (e.g., the display module 160 of FIG. 1 and/or the display 201 of FIGS. 2, 4, and 5), an opening (air vent hole) 2301, a battery 245 (e.g., the battery 245 of FIGS. 4 and 5), an antenna assembly 250 (e.g., the antenna module 197 of FIG. 1), a rear surface plate 290 (e.g., the rear surface plate 290 of FIGS. 4 and 5), a non-conductive cover 261 (e.g., the non-conductive cover 261 of FIGS. 2 and 4), and a ventilation member 271. In FIG. 6, illustration of some components of the electronic device 101, such as a printed circuit board (e.g., the printed circuit board 240a of FIGS. 4 and 5), may be omitted. The electronic device 101 provided by the embodiments of the disclosure may include a ventilation structure (or air vent structure) including a combination of the opening 2301, the non-conductive cover 261, and the ventilation member 271.

In an embodiment, the housing 230 may include a support structure 231 (e.g., the support structure 231 of FIGS. 4 and 5), which provides a mounting space for electrical/electronic components (e.g., the battery 245 and the antenna assembly 250), and a side surface bezel structure 232 (e.g., the support structure 231 of FIGS. 4 and 5), which forms an outer surface of the electronic device 101. According to an embodiment, the side surface bezel structure 232 may be positioned along an edge of the support structure 231. According to an embodiment, the side surface bezel structure 232 and the support structure 231 may be integrally formed or fabricated. According to an embodiment, the side surface bezel structure 232 and the support structure 231 may be separately formed or fabricated and then coupled. In the disclosure, the side surface bezel structure 232 may be referred to as the "first portion" of the housing 230, and the support structure 231 may be referred to as the "second portion" of the housing 230.

According to an embodiment, each of the support structure 231 and the side surface bezel structure 232 may include a conductive portion (e.g., metal) and a non-conductive portion (e.g., polymer). For example, the conductive portion may serve as a ground area for electrical/electronic components of the electronic device 101. According to an embodiment, the display 201 may be disposed to face a front surface (e.g., the front side 210A of FIG. 2) of the electronic device 101. For example, the display 201 may be disposed on one surface of the support structure 231 (e.g., a front surface or a surface oriented in the +Z-direction).

In an embodiment, the opening 2301 may be formed through one side of the housing 230 so as to receive the non-conductive cover 261 and the ventilation member 271 therein. According to an embodiment, the opening 2301 may be formed from the side surface bezel structure (or first portion) 232 of the housing 230 to a portion of the support structure (or second portion) 231. According to an embodiment, the non-conductive cover 261 and/or the ventilation member 271 may be overlapped or aligned with the antenna assembly 250 disposed inside the housing 230, with respect to a single axis (e.g., the X-axis).

According to an embodiment, the opening 2301 may include a first opening 2321 formed on one side (e.g., the side or side wall in the +X direction) of the side surface bezel structure 232, and a second opening 2311 formed in the support structure 231 to correspond to the first opening 2321. According to an embodiment, the electronic device 101 may include a ventilation structure (or air vent structure) that fluidly connects the exterior and interior of the electronic device 101 through the first opening 2321 exposed to the outside and the second opening 2311 connected to the first opening 2321.

According to an embodiment, the first opening 2321 may be formed in one side wall (e.g., a side wall in the +X-direction) of the side surface bezel structure adjacent to the antenna assembly 250 disposed within the housing 230. According to an embodiment, the second opening 2311 may be formed in a first area 231a of the support structure 231 that overlaps the first opening 2321. According to an embodiment, the first area 231a of the support structure 231 may be a non-conductive portion of the support structure 231, which is disposed on an inner surface of the side surface bezel structure 232. For example, the first area 231a may extend along at least a portion of the inner surface of the side surface bezel structure 232. According to an embodiment, the side surface bezel structure 232 may include a conductive material such as metal. For example, the side surface bezel structure 232 may at least partially include a non-conductive portion that extends from the non-conductive portion (e.g., the first area 231a) of the support structure 231. However, the aforementioned features regarding the support structure 231 and the side surface bezel structure 232 are not limiting. For example, according to an embodiment, the first area 231a may include a conductive material in whole or in part. According to an embodiment, the area (or size) of the second opening 2311 may be smaller than the area of the first opening 2321. However, according to an embodiment (not illustrated), the area (or size) of the second opening 2311 may be equal to or greater than that of the first opening 2321.

Referring to FIGS. 7 to 9A, in an embodiment, the non-conductive cover 261 may be disposed in the first opening 2321 of the side surface bezel structure 232. Referring to FIGS. 6 and 10, according to an embodiment, the ventilation member 271 may be disposed between the non-conductive cover 261 and the first area 231a of the support structure 231. According to an embodiment, when viewed along a single axis direction (e.g., the X-axis direction), the ventilation member 271 may be positioned to overlap the second opening 2311. According to an embodiment, the ventilation member 271 may be configured to allow fluid (or liquid and gas) to pass therethrough, and the second opening 2311 may be fluidly connected to the first opening 2321 (or a gap between the first opening 2321 and the non-conductive cover 261) through the ventilation member 271. According to an embodiment, the first opening 2321, the second opening 2311, the non-conductive cover 261, and the ventilation member 271 may be aligned along at least one axis (e.g., the X-axis).

In an embodiment, the non-conductive cover 261 may be disposed in the first opening 2321 such that an outer surface is exposed to the outside of the electronic device 101 and an inner surface faces the first area 231a of the support structure 231. According to an embodiment, the non-conductive cover 261 may be made of a non-conductive material such as a polymer (e.g., polycarbonate). Referring to FIG. 10, in an embodiment, a gap (e.g., a coupling clearance) may exist between the non-conductive cover 261 and the first opening 2321. For example, a side surface between the outer surface and the inner surface of the non-conductive cover 261 may be spaced apart from a surface of the first opening 2321. According to an embodiment, the non-conductive cover 261 may be spaced apart from the ventilation member 271 disposed between the non-conductive cover 261 and the first area 231a of the support structure 231. Referring to FIG. 9B, according to an embodiment, the non-conductive cover 261 may include at least one connection area 261a on an inner surface thereof. According to an embodiment, the connection area 261a may be coupled to a peripheral portion of the second opening 2311 of the first area 231a. According to an embodiment, the second opening 2311 may be aligned with the central portion of the non-conductive cover 261. For example, a plurality of (e.g., two) connection areas 261a may be provided on the inner surface of the non-conductive cover 261 to be spaced apart from a central portion thereof. For example, the connection areas 261a may be disposed at opposite ends of the inner surface of the non-conductive cover 261.

Referring to FIGS. 6 and 10, in an embodiment, the ventilation member 271 may be disposed between the non-conductive cover 261 and the second opening 2311 of the first area 231a. According to an embodiment, the ventilation member 271 may be disposed on one surface of the first area 231a facing the non-conductive cover 261, or on an outer surface (e.g., the surface oriented in the +X direction) of the first area 231a, so as to cover (or close) the second opening 2311. For example, the ventilation member 271 may have a larger area than the second opening 2311. As an example, the area of the ventilation member 271 may be greater than that of the second opening 2311 and smaller than that of the first opening 2321. For example, the ventilation member 271 may be bonded to a peripheral portion of the second opening 2311 of the first area 231a via an adhesive member such as double-sided tape. According to an embodiment, the ventilation member 271 may be configured to allow fluid to pass therethrough and may include a porous structure such as a mesh structure. According to an embodiment, a separation space may be defined between the ventilation member 271 and the non-conductive cover 261, and the separation space may be connected to a gap between the first opening 2321 and the non-conductive cover 261.

Referring to FIG. 10, in an embodiment, the electronic device 101 may include a ventilation structure (or air vent structure) that connects or fluidly connects the exterior and interior of the electronic device 101 through the first opening 2321 exposed to the outside and the second opening 2311 connected to the first opening 2321. In an embodiment, a gap (e.g., a coupling clearance) may exist between the non-conductive cover 261 and the first opening 2321. According to an embodiment, a separation space may be defined between the ventilation member 271 and the non-conductive cover 261, and the separation space may be connected to a gap between the first opening 2321 and the non-conductive cover 261. According to an embodiment, the ventilation member 271 may be configured to allow fluid to pass therethrough, and the gap between the first opening 2321 and the non-conductive cover 261 and the second opening 2311 may be fluidly connected through the ventilation member 271. According to an embodiment, the ventilation structure may extend to an internal space of the electronic device 101 surrounded by the housing 230, through the gap between the first opening 2321 and the non-conductive cover 261, the separation space between the non-conductive cover 261 and the ventilation member 271, the ventilation member 271, and the second opening 2311, where the first opening 2321 is connected to the outside of the electronic device 101. For example, through the ventilation structure, air may be exchanged between the interior and exterior of the electronic device 101, so that pressure and humidity in the internal space of the electronic device 101 may be regulated.

In an embodiment, the antenna assembly 250 may be disposed on the support structure 231 to overlap the non-conductive cover 261. For example, the antenna assembly 250 may face the non-conductive cover 261 across at least a portion of the side surface bezel structure 232 (e.g., the first opening 2321), the first area 231a of the support structure 231 (e.g., the second opening 2311), and the ventilation member 271. According to an embodiment, the antenna assembly 250 may be mounted to the support structure 231 (e.g., a seating area 231b) in the direction of the arrow shown in FIG. 7, and the non-conductive cover 261 may be seated in the first opening 2321 in the direction indicated by an arrow in FIG. 7. According to an embodiment, the support structure 231 may include a seating area 231b configured to accommodate or seat the antenna assembly 250. For example, the seating area 231b may be a recess or groove area formed to correspond to the shape of the antenna assembly 250.

Referring to FIG. 7, in an embodiment, the antenna assembly 250 may include a substrate 251 and a molding portion 252 disposed on the substrate 251. The substrate 251 may include an antenna array (not illustrated) including a plurality of conductive patches (or radiators) disposed on one surface (e.g., a front surface or a surface oriented in the +X direction). For example, the antenna array may be disposed to face the side surface bezel structure 232. According to an embodiment, the antenna assembly 250 may radiate toward an exterior or a lateral side of the electronic device 101. For example, a conductive portion of the side surface bezel structure 232 of the housing 230 may affect the radiation performance of the antenna assembly 250. According to an embodiment, in order to prevent degradation of the performance of the antenna assembly 250, the non-conductive cover 261 may be disposed on the side surface bezel structure 232 so as to cover a radiation range of wireless signals of the antenna assembly 250. The molding portion 252 may be formed on a surface of the substrate 251 opposite to the front surface (e.g., the rear surface or a surface oriented in the -X direction). For example, an integrated circuit chip (not illustrated) configured to transmit and receive wireless signals using the conductive patches of the substrate 251 may be mounted on the rear surface of the substrate 251. The molding portion 252 may be formed to enclose the integrated circuit chip to protect the integrated circuit chip from an external environment.

According to an embodiment, even when the molding portion 252 is formed, a portion of the rear surface (e.g., the surface oriented in the -X direction) of the substrate 251 may remain exposed. In an embodiment, a connector (not illustrated) may be disposed in the exposed area of the rear surface of the substrate 251. The connector (not illustrated) may provide means for connecting the antenna assembly 250 to another antenna module or a printed circuit board (e.g., the printed circuit board 240a of FIGS. 4 and 5). For example, a conductive line 253 of FIG. 7 (e.g., a coaxial cable or an FPCB) may be electrically or mechanically connected to the connector disposed on the substrate 251.

In an embodiment, the electronic device 101 may further include an antenna bracket 259. According to an embodiment, the antenna bracket 259 may be coupled to at least partially enclose the antenna assembly 250, and may be fastened to the housing 230 to fix the antenna assembly 250. For example, the antenna assembly 250 may be fixed within the seating area 231b of the housing 230 by a fastening member (e.g., a screw mechanism).

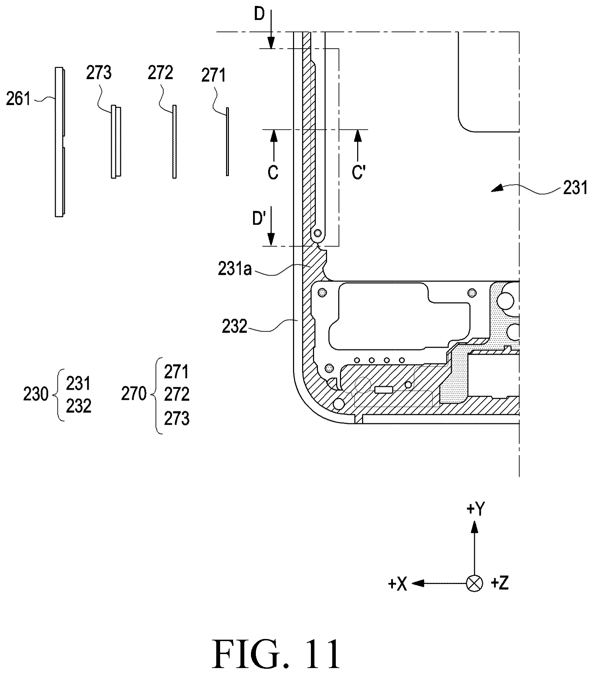

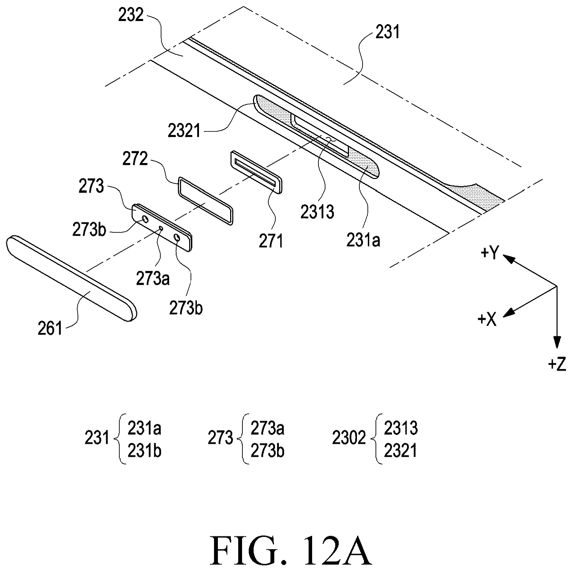

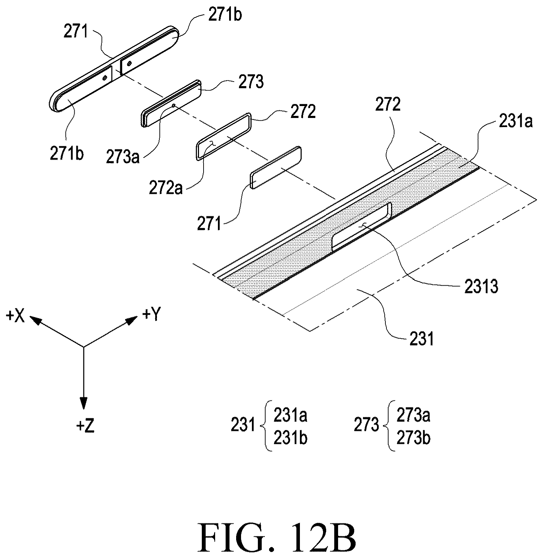

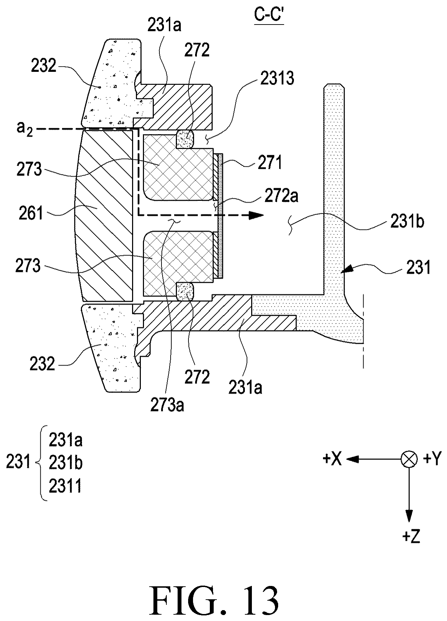

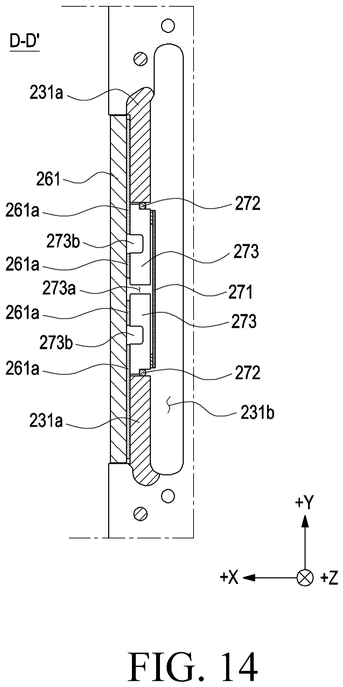

FIG. 11 is a rear view illustrating a housing, a non-conductive cover, and a ventilation assembly of an electronic device according to an embodiment of the disclosure. FIG. 12A is a front exploded perspective view illustrating the housing, the non-conductive cover, and the ventilation assembly of the electronic device according to an embodiment of the disclosure. FIG. 12B is a rear exploded perspective view illustrating the housing, the non-conductive cover, and the ventilation assembly of the electronic device according to an embodiment of the disclosure. FIG. 13 is a cross-sectional view taken along line C-C' of FIG. 11. FIG. 14 is a cross-sectional view taken along line D-D' of FIG. 11.

The configuration of the housing 230 illustrated in FIGS. 11 to 14 may be entirely or partially identical to the configuration of the housing 230 illustrated in FIGS. 6 to 9A and FIG. 10. The configuration of the non-conductive cover 261 illustrated in FIGS. 11 to 14 may be entirely or partially identical to the configuration of the non-conductive cover 261 illustrated in FIG. 6 and FIGS. 8 to 9B. The configuration of the ventilation member 271 of the ventilation assembly 270 illustrated in FIGS. 11 to 14 may be entirely or partially identical to the configuration of the ventilation member 271 illustrated in FIG. 6 and FIGS. 8 to 9A. The above description regarding the embodiment of FIGS. 6 to 10 may also be applicable to components having the same reference numerals in the embodiment of FIGS. 11 to 14.

Referring to FIGS. 11 to 14, in an embodiment, an electronic device 101 (e.g., the electronic device 101 of FIGS. 1 to 5) may include a housing 230, a display 201 (e.g., the display module 160 of FIG. 1 and/or the display 201 of FIGS. 2, 4, and 5), an opening 2302 (e.g., the opening 2301 of FIG. 6), an antenna assembly 250 (e.g., the antenna assembly 250 of FIGS. 6 and 7), a non-conductive cover 261, and a ventilation assembly 270. In FIG. 6, illustration of some components of the electronic device 101, such as a battery 245 (e.g., the battery 245 of FIGS. 4 and 5) and a printed circuit board (e.g., the printed circuit board 240a of FIGS. 4 and 5), may be omitted. The electronic device 101 provided by the embodiments of the present disclosure may include a ventilation structure (or air vent structure) including a combination of the opening 2302, the non-conductive cover 261, and the ventilation assembly 270. For example, air inside and outside the electronic device 101 may move along a path indicated by arrow a2 in FIG. 13 or in a direction opposite to arrow a2, according to the ventilation structure.

In an embodiment, the housing 230 may include a support structure 231 (e.g., the support structure 231 of FIGS. 6 and 7) that provides a seating space for electrical/electronic components (e.g., the antenna assembly 250), and a side surface bezel structure 232 (e.g., the support structure 231 of FIGS. 6 and 7) that forms an outer surface (or exterior) of the electronic device 101. According to an embodiment, the side surface bezel structure 232 may be positioned along an edge of the support structure 231. According to an embodiment, the side surface bezel structure 232 and the support structure 231 may be integrally formed or fabricated. According to an embodiment, the side surface bezel structure 232 and the support structure 231 may be separately formed or fabricated and then coupled. In the disclosure, the side surface bezel structure 232 may be referred to as the "first portion" of the housing 230, and the support structure 231 may be referred to as the "second portion" of the housing 230.

According to an embodiment, each of the support structure 231 and the side surface bezel structure 232 may include a conductive portion (e.g., metal) and a non-conductive portion (e.g., polymer). For example, the conductive portion may serve as a ground area for electrical/electronic components of the electronic device 101. According to an embodiment, the display 201 may be disposed to face a front surface (e.g., the front side 210A of FIG. 2) of the electronic device 101. For example, the display 201 may be disposed on one surface of the support structure 231 (e.g., a front surface or a surface oriented in the +Z-direction).

In an embodiment, the opening 2302 may be formed through one side of the housing 230 so as to receive the non-conductive cover 261 and the ventilation assembly 270 therein. According to an embodiment, the opening 2302 may be formed from the side surface bezel structure (or first portion) 232 of the housing 230 to a portion of the support structure (or second portion) 231. According to an embodiment, the non-conductive cover 261 and/or the ventilation assembly 270 may be overlapped or aligned with the antenna assembly (e.g., the antenna assembly 250 of FIGS. 6 and 7) disposed inside the housing 230 with respect to a single axis (e.g., the X-axis).

According to an embodiment, the opening 2302 may include a first opening 2321 formed on one side (e.g., the side or side wall in the +X direction) of the side surface bezel structure 232, and a second opening 2313 formed in the support structure 231 to correspond to the first opening 2321. According to an embodiment, the electronic device 101 may include a ventilation structure (or air vent structure) that connects or fluidly connects the interior and exterior of the electronic device 101 through the first opening 2321 exposed to the outside and the second opening 2313 connected to the first opening 2321.

According to an embodiment, the first opening 2321 may be formed in a side wall (e.g., a side wall in the +X direction) of the side surface bezel structure, adjacent to the antenna assembly (e.g., the antenna assembly 250 of FIGS. 6 and 7) disposed within the housing 230. According to an embodiment, the second opening 2313 may be formed in a first area 231a of the support structure 231 that overlaps the first opening 2321. According to an embodiment, the first area 231a of the support structure 231 may be a non-conductive portion of the support structure 231, which is disposed on an inner surface of the side surface bezel structure 232. For example, the first area 231a may extend along at least a portion of the inner surface of the side surface bezel structure 232.

According to an embodiment, the side surface bezel structure 232 may include a conductive material such as metal. For example, the side surface bezel structure 232 may at least partially include a non-conductive portion that extends from the non-conductive portion (e.g., the first area 231a) of the support structure 231. However, the aforementioned features regarding the support structure 231 and the side surface bezel structure 232 are not limiting. For example, according to an embodiment, the first area 231a may include a conductive material in whole or in part. For example, the second opening 2313 may have a width (e.g., a width in the Z-axis direction) that is substantially equal to that of the first opening 2321. According to an embodiment, the area (or size) of the second opening 2313 may be smaller than the area of the first opening 2321. In an embodiment (not illustrated), the area (or size) of the second opening 2313 may be equal to or greater than the area of the first opening 2321. However, the area (size) and shape of the first opening 2321 and the second opening 2313 are not limited to the above description and may vary depending on the arrangement relative to the antenna assembly (e.g., the antenna assembly 250 of FIGS. 6 and 7).

Referring to FIGS. 13 and 14, in an embodiment, the non-conductive cover 261 may be disposed in the first opening 2321 of the side surface bezel structure 232. According to an embodiment, the ventilation assembly 270 may be disposed between the non-conductive cover 261 and the first area 231a of the support structure 231. According to an embodiment, the ventilation assembly 270 may be disposed to close the second opening 2313. According to an embodiment, the ventilation assembly 270 may be configured to allow fluid (or liquid and gas) to pass therethrough, and the second opening 2313 may be fluidly connected to the first opening 2321 (or a gap between the first opening 2321 and the non-conductive cover 261) through the ventilation assembly 270. According to an embodiment, the first opening 2321, the second opening 2313, the non-conductive cover 261, and the ventilation assembly 270 may be aligned along at least one axis (e.g., the X-axis).

In an embodiment, the non-conductive cover 261 may be disposed in the first opening 2321 such that an outer surface is exposed to the outside of the electronic device 101 and an inner surface faces the first area 231a of the support structure 231. According to an embodiment, the non-conductive cover 261 may be mounted in the first opening 2321 in the state of being coupled to the ventilation assembly 270. According to an embodiment, the non-conductive cover 261 may be made of a non-conductive material such as a polymer (e.g., polycarbonate).

Referring to FIG. 10, in an embodiment, a gap (e.g., a coupling clearance) may exist between the non-conductive cover 261 and the first opening 2321. For example, a side surface between the outer surface and the inner surface of the non-conductive cover 261 may be spaced apart from a surface of the first opening 2321. According to an embodiment, the non-conductive cover 261 may be spaced apart from the ventilation assembly 270 (e.g., the support member 273) disposed in the second opening 2313. Referring to FIG. 12B, according to an embodiment, the non-conductive cover 261 may include at least one connection area 261b on an inner surface thereof. According to an embodiment, the connection area 261b may be coupled to a peripheral portion of the second opening 2313 in the first area 231a. According to an embodiment, the second opening 2313 may be aligned with the central portion of the non-conductive cover 261. For example, a plurality of (e.g., two) connection areas 261b may be provided on the inner surface of the non-conductive cover 261 to be spaced apart from a central portion thereof. For example, the connection areas 261b may be disposed at opposite ends of the inner surface of the non-conductive cover 261.

Referring to FIGS. 11 to 14, according to an embodiment, the ventilation assembly 270 may be disposed in the second opening 2313 and may include a support member 273, a waterproofing member 272, and a ventilation member 271.

According to an embodiment, the support member 273 may be arranged such that its front surface (e.g., the surface oriented in the +X direction) faces the non-conductive cover 261. According to an embodiment, a separation space may be defined between the support member 273 and the non-conductive cover 261, and the separation space may be connected to a gap between the first opening 2321 and the non-conductive cover 261. According to an embodiment, the support member 273 may include at least one through-hole 273a in the central portion thereof. The through-hole 273a may be connected to the separation space between the support member 273 and the non-conductive cover 261. The through-hole 273a may serve as a passage through which air moves as a portion of the ventilation structure of the electronic device 101, as described below.

According to an embodiment, the support member 273 may include at least one groove 273b on a surface facing the non-conductive cover 261. For example, the groove 273b of the support member 273 may be positioned around the through-hole 273a. For example, an adhesive or bonding material may be provided in the groove 273b of the support member 273, or a connection portion (not illustrated) protruding from the non-conductive cover 261 may be received in the groove 273b of the support member 273. According to an embodiment, the groove 273b of the support member 273 may be omitted.

According to an embodiment, the waterproofing member 272 may be disposed to seal a gap between the support member 273 and the second opening 2313. According to an embodiment, the waterproofing member 272 may be a ring-shaped member having a hole 272a in the central portion. For example, the support member 273 may be received in the hole 272a of the waterproofing member 272. For example, the waterproofing member 272 may be made of an elastically deformable material, and the waterproofing member 272 may press-fit and fix the ventilation assembly 270 into the second opening 2313 by frictional force.

According to an embodiment, the ventilation member 271 may be disposed on a rear surface (e.g., a surface oriented in the -X direction) of the support member 273. According to an embodiment, the ventilation member 271 may be press-fitted to the support member 273 to form the ventilation assembly 270. For example, when the ventilation member 271 is configured as the ventilation assembly 270 and then coupled to the opening 2302 of the housing 310, workability may be improved compared to a case in which the ventilation member 271 is coupled to the opening 2302 of the housing 310 as an individual component, because equipment such as a compression jig is not required during the assembly process.

According to an embodiment, the ventilation member 271 may be configured to allow fluid to pass therethrough and may include a porous structure such as a mesh structure.

Referring to FIG. 13, in an embodiment, the electronic device 101 may include a ventilation structure (or air vent structure) that connects or fluidly connects the exterior and interior of the electronic device 101 through the first opening 2321 exposed to the outside and the second opening 2313 connected to the first opening 2321. For example, air inside and outside the electronic device 101 may move along a path indicated by arrow a2 in FIG. 13 or in a direction opposite to arrow a2, according to the ventilation structure.

In an embodiment, a gap (e.g., a coupling clearance) may exist between the non-conductive cover 261 and the first opening 2321. According to an embodiment, a separation space may be defined between the ventilation assembly 270 (e.g., the support member 273) and the non-conductive cover 261, and the separation space may be connected to a gap between the first opening 2321 and the non-conductive cover 261. According to an embodiment, the support member 273 may include a hole 283a that penetrates from a surface facing the non-conductive cover 261 inward into the electronic device 101. Through the hole 283a, air may move between the separation space defined between the front surface of the support member 273 and the non-conductive cover 261, and the ventilation member 271 disposed on the rear surface of the support member 273. According to an embodiment, the ventilation member 271 may be configured to allow fluid (liquid and gas) to pass therethrough, and a gap between the first opening 2321 and the non-conductive cover 261 and the interior of the electronic device 101 may be fluidly connected through the ventilation member 271. According to an embodiment, the ventilation structure may extend to an internal space of the electronic device 101 surrounded by the housing 230 through the gap between the first opening 2321 and the non-conductive cover 261, the separation space between the non-conductive cover 261 and the ventilation member 271, the hole 283a of the support member 273, and the ventilation member 271. For example, through the ventilation structure, air may be exchanged between the interior and exterior of the electronic device 101, so that pressure and humidity in the internal space of the electronic device 101 may be regulated.

In an embodiment, the antenna assembly (e.g., the antenna assembly 250 of FIGS. 6 and 7) may be disposed in a seating area 231b (e.g., the seating area 231b of FIG. 7) of the support structure 231, and may be arranged to overlap the non-conductive cover 261. For example, the antenna assembly 250 may face the non-conductive cover 261 across at least a portion of the side surface bezel structure 232 (e.g., the first opening 2321), the first area 231a of the support structure 231 (e.g., the second opening 2313), and the ventilation member 271. For example, the seating area 231b may be a recess or groove area formed to correspond to the shape of the antenna assembly 250. In an embodiment, the electronic device 101 may further include an antenna bracket (e.g., the antenna bracket 259 of FIG. 7). According to an embodiment, the antenna bracket 259 may be coupled to at least partially enclose the antenna assembly 250 and may be fastened to the housing 230 to fix the antenna assembly 250. For example, the antenna assembly 250 may be fixed within the seating area 231b of the housing 230 by a fastening member (e.g., a screw mechanism).

In an embodiment, the antenna assembly (e.g., the antenna assembly 250 of FIGS. 6 and 7) may include a substrate (e.g., the substrate 251 of FIG. 7) and a molding portion (e.g., the molding portion 252 of FIG. 7) disposed on the substrate 251. The substrate 251 may include an antenna array (not illustrated) including a plurality of conductive patches (or radiators) disposed on one surface (e.g., a front surface or a surface oriented in the +X direction). For example, the antenna array may be disposed to face the side surface bezel structure 232. According to an embodiment, the antenna assembly 250 may radiate toward an exterior or a lateral side of the electronic device 101. For example, a conductive portion of the side surface bezel structure 232 of the housing 230 may affect the radiation performance of the antenna assembly 250. According to an embodiment, in order to prevent degradation of the performance of the antenna assembly 250, the non-conductive cover 261 may be disposed on the side surface bezel structure 232 so as to cover a radiation range of wireless signals of the antenna assembly 250. The molding portion 252 may be formed on a surface of the substrate 251 opposite to the front surface (e.g., the rear surface or a surface oriented in the -X direction). For example, an integrated circuit chip (not illustrated) configured to transmit and receive wireless signals using the conductive patches of the substrate 251 may be mounted on the rear surface of the substrate 251. The molding portion 252 may be formed to enclose the integrated circuit chip to protect the integrated circuit chip from an external environment.

According to an embodiment, even when the molding portion (e.g., the molding portion 252 of FIG. 7) is formed, a portion of the rear surface (e.g., a surface oriented in the -X direction) of the substrate (e.g., the substrate 251 of FIG. 7) may remain exposed. In an embodiment, a connector (not illustrated) may be disposed in the exposed area of the rear surface of the substrate 251. The connector (not illustrated) may provide means for connecting the antenna assembly 250 to another antenna module or a printed circuit board (e.g., the printed circuit board 240a of FIGS. 4 and 5). For example, a conductive line (e.g., the conductive line 253 of FIG. 7) (e.g., a coaxial cable or an FPCB) may be electrically or mechanically connected to the connector disposed on the substrate 251.

An electronic device (for example, a mobile terminal) may include a sealed structure that blocks a path through which moisture may be introduced, to ensure waterproofing. In an electronic device including such a sealed structure, airflow between the exterior and interior of the electronic device may be blocked, which may increase the pressure difference between the exterior and interior of the electronic device. When the pressure difference between the exterior and interior of the electronic device increases, fogging or dew condensation may occur on the camera window, or the performance of an atmospheric pressure sensor or speaker may be degraded.

An electronic device that utilizes a gap to reduce a pressure difference between the exterior and interior of the electronic device while providing a sealed structure capable of preventing the introduction of moisture is being studied. As an example, an air vent structure in which a gap formed between a camera window and a camera decoration member is used as an air passage may be utilized. Such an air vent structure may have limited applicability in that the pressure regulation performance may be reduced due to insufficient airflow and its use may be limited to integrated camera modules. For example, an air vent hole leading to the interior of the electronic device may be separately formed in a side surface bezel structure of the housing. However, an air vent hole visible on the exterior of the electronic device may impair the aesthetic appearance of the electronic device.

Embodiments of the present disclosure are intended to at least address the above-described problems and/or disadvantages and to at least provide advantages described below, and may provide an electronic device capable of regulating pressure and humidity inside the electronic device through a ventilation structure that utilizes a coupling gap between an opening formed on one side of the housing and an antenna cover positioned in the opening as an air passage.

The technical subjects pursued in the disclosure may not be limited to the above-mentioned subjects, and other technical subjects which are not mentioned herein may be clearly understood from the following description by those skilled in the art to which the disclosure pertains.

An electronic device according to various embodiments of the disclosure may reduce a pressure difference between the interior and exterior of the electronic device by using an opening formed in a housing and an air vent corresponding to the opening. As the pressure difference between the interior and exterior of the electronic device is reduced, fogging occurring on a camera window may be reduced, and the performance of an atmospheric pressure sensor and a speaker may be improved.

Advantageous effects obtainable from the disclosure may not be limited to the above-mentioned effects, and other effects which are not mentioned herein may be clearly understood from the following description by those skilled in the art to which the disclosure pertains.

According to the disclosure, an electronic device 101 may be provided. The electronic device may include a housing 230 including a first portion that defines a part of an exterior of the electronic device and a second portion that extends to an inside the electronic device from the first portion, an opening 2301 or 2302 formed through the first portion to a part of the second portion, a non-conductive cover 261 disposed in the opening formed in the first portion, an antenna assembly 250 located on the second portion and disposed to face the non-conductive cover through the opening, and a ventilation member 271 disposed in the opening and between the non-conductive cover and the antenna assembly.

According to an embodiment, at least one of the non-conductive cover or the ventilation member may be disposed to block at least a portion of the opening.

According to an embodiment, the electronic device may include a ventilation structure connected to an interior of the electronic device surrounded by the housing, from a gap between the non-conductive cover and the opening, through the ventilation member.

According to an embodiment, the antenna assembly may overlap the non-conductive cover.

According to an embodiment, a separation space connected to the ventilation structure may be defined between the non-conductive cover and the ventilation member.

According to an embodiment, the opening may include a first opening 2311 in which the non-conductive cover is disposed, and a second opening 2321 in which the ventilation member is disposed. The second opening has a smaller area than the first opening.

According to an embodiment, the electronic device may include a support member 273 positioned between the non-conductive cover and the ventilation member. The ventilation member is disposed on one surface of the support member.

According to an embodiment, the support member may include at least one through-hole 273a connected to the ventilation structure.

According to an embodiment, the electronic device may further include a waterproofing member 272 disposed around a periphery of the support member to seal a gap between the support member and the through-hole.

According to an embodiment, the opening may not overlap the antenna assembly.

According to an embodiment, the non-conductive cover may include at least one connection area disposed on an inner surface thereof. The connection area may be coupled to either the first portion around the opening or one surface of the ventilation member.

According to an embodiment, the ventilation member may include a porous structure that allows fluid to pass therethrough.

According to an embodiment, the electronic device may further include a display 201 disposed on the second portion. The antenna assembly may be located between the display and the second portion.

According to an embodiment, the electronic device may further include an antenna bracket 259 configured to fix the antenna assembly to a seating area 231b formed in the first portion.

According to an embodiment, the antenna assembly may include a substrate 251 having a radiator disposed on one surface thereof facing the non-conductive cover, and a molding portion 252 disposed on a surface of the substrate opposite to the one surface.

According to the disclosure, an electronic device 101 may be provided. The electronic device may include a housing 230 including a first portion that defines a part of an exterior of the electronic device and a second portion that extends to an inside the electronic device from the first portion, an opening 2301 or 2302 formed through the first portion to a part of the second portion, a non-conductive cover 261 disposed in the opening formed in the first portion, an antenna assembly 250 located on the second portion and disposed to face the non-conductive cover through the opening, and a ventilation member 271 disposed in the opening and between the non-conductive cover and the antenna assembly. The electronic device may include a ventilation structure connected to an interior of the electronic device surrounded by the housing, from a gap between the non-conductive cover and the opening, through the ventilation member.

According to an embodiment, at least one of the non-conductive cover or the ventilation member may be disposed to block at least a portion of the opening. A separation space connected to the ventilation structure may be defined between the non-conductive cover and the ventilation member.

According to an embodiment, the electronic device may include a support member 273 positioned between the non-conductive cover and the ventilation member. The ventilation member is disposed on one surface of the support member. The support member may include at least one through-hole 273a connected to the ventilation structure.

According to an embodiment, the electronic device may further include a waterproofing member 272 disposed around the support member to seal a gap between the support member and the opening.

According to an embodiment, the antenna assembly may include a substrate 251 having a radiator disposed on one surface thereof facing the non-conductive cover, and a molded portion 252 disposed on a surface of the substrate opposite to the one surface.

Although embodiments of the disclosure have been described above, the foregoing embodiments are to be understood as illustrative and not restrictive of the disclosure. It will be apparent to those skilled in the art that various changes in form and detail may be made without departing from the overall scope of the disclosure, including the appended claims and their equivalents.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiment and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a housing (230) comprising a first portion (232) defining a part of an exterior of the electronic device and a second portion (231) extending to an inside the electronic device from the first portion;
an opening (2301; 2302) formed through the first portion to a part of the second portion;
a non-conductive cover (261) disposed in the opening formed in the first portion;
an antenna assembly (250) located on the second portion and disposed to face the non-conductive cover through the opening; and
a ventilation member (271) disposed in the opening and between the non-conductive cover and the antenna assembly.

2. The electronic device of claim 1, wherein at least one of the non-conductive cover or the ventilation member is disposed to block at least a part of the opening.

3. The electronic device of claim 1 or 2, further comprising:
a ventilation structure configured to be connected to an interior of the electronic device surrounded by the housing, from a gap between the non-conductive cover and the opening, through the ventilation member.

4. The electronic device of claim 3, wherein the antenna assembly overlaps the non-conductive cover.

5. The electronic device of claim 4, wherein, between the non-conductive cover and the ventilation member, a separation space connected to the ventilation structure is defined.

6. The electronic device of one of claims 1 to 5, wherein the opening comprises:
a first opening (2311) in which the non-conductive cover is disposed; and
a second opening (2321) in which the ventilation member is disposed, the second opening having a smaller area than the first opening.

7. The electronic device of claim 5, further comprising:
a support member (273) positioned between the non-conductive cover and the ventilation member, wherein the ventilation member is disposed on one surface of the support member.

8. The electronic device of claim 7, wherein the support member comprises at least one through-hole (273a) connected to the ventilation structure.

9. The electronic device of claim 8, further comprising:
a waterproofing member (272) disposed around a periphery of the support member to seal a gap between the support member and the through-hole.

10. The electronic device of any one of claims 7 to 9, wherein the opening does not overlap the antenna assembly.

11. The electronic device of any one of claims 1 to 10, wherein the non-conductive cover comprises at least one connection area disposed on an inner surface of the non-conductive cover, and
wherein the connection area is coupled to either the first portion around the opening or one surface of the ventilation member.

12. The electronic device of any one of claims 1 to 11, wherein the ventilation member comprises a porous structure that allows fluid to pass therethrough.

13. The electronic device of any one of claims 1 to 11, further comprising:
a display (201) disposed on the second portion,
wherein the antenna assembly is disposed between the display and the second portion.

14. The electronic device of any one of claims 1 to 13, wherein the antenna assembly comprises:
a substrate (251) having a radiator disposed on one surface of the substrate facing the non-conductive cover; and
a molding portion (252) disposed on a surface of the substrate opposite to the one surface.

15. The electronic device of claim 14, further comprising:
an antenna bracket (259) configured to fix the antenna assembly to a seating area (231b) formed in the first portion.
